# EUROPEAN PATENT APPLICATION

(11) **EP 0 938 080 A1**
(43) Date of publication of application: **25.08.1999**
(21) Application number: 99301168.3
(22) Date of filing: 17.02.1999
(51) Int. Cl.: G11B 5/54

(54) **A magnetic latching apparatus for use in a hard disc drive**

(30) Priority: 18.02.1998 KR 0489498
(71) Applicant: SAMSUNG ELECTRONICS CO., LTD., Suwon-City, Kyungki-do (KR)
(72) Inventor: jang, Deok-Hwan, Paldal-gu, Suwon, Kyonggi-do (KR); Kim, Young-Il, Sujieup, Yongin City, Kyungki-Do (KR)
(74) Representative: Chugg, David John

(57) **Abstract**

Disclosed is a magnetic latching apparatus for use in a hard disk drive. The magnetic latching apparatus for use in a hard disk drive according to the present invention, in which a magnetic head (36) is automatically positioned at a parking zone of a magnetic disk (32) as an arm (34) returns back to an initial position when an electric current applied to the hard disk drive is interrupted, comprises: one or more permanent magnets (50) disposed on a predetermined portion at an outer end of the arm; and means (60) for locking and unlocking the arm by means of a magnetic force of the permanent magnets (50), the means providing the permanent magnet(s) (50) with a repulsive force as the electric current is applied to the hard disk drive.

## Description

The present invention relates to a hard disk drive (HDD), and more particularly to a magnetic latching apparatus for use in a hard disk drive, in which there is provided an actuator of simple construction. It is an aim of embodiments of the invention to reduce power consumption and improve product reliability such that even if the actuator is repeatedly operated, the actuator can be prevented from malfunctioning.

Generally, computers include an auxiliary memory which is used to support a main memory for storing a large amount of data which exceeds the storage capacity of the main memory. A magnetic disk, a magnetic tape, a magnetic drum, a floppy disk and an optical disk are used as auxiliary memories. A hard disk drive having at least one magnetic disk is widely used as an auxiliary memory in a personal computer.

Hereinafter, a hard disk drive according to an embodiment of the conventional art will be described with reference to attached drawings.

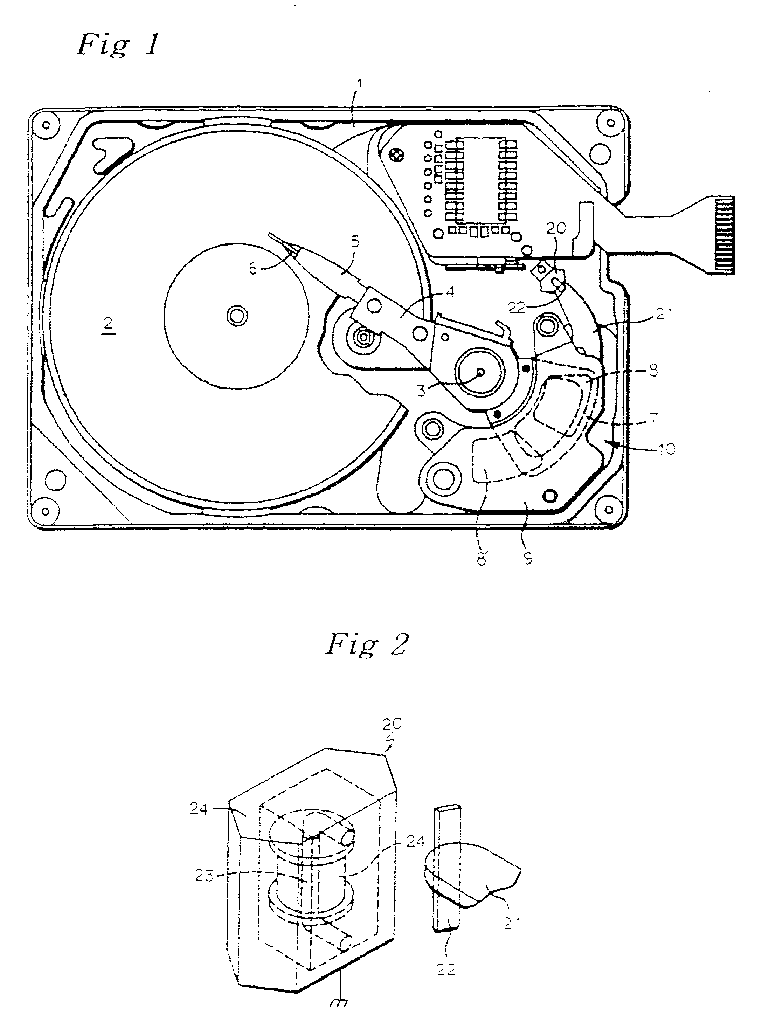

As shown in Figures 1 and 2, at least one magnetic disk 2 is mounted to be rotated by a spindle motor (not shown) located to one side of a main body portion 1. It is possible to read or record information on both sides of the magnetic disk 2.

An actuator is installed on the other side of the main body 1. The actuator includes an arm 4 which is rotatably supported by a pivot bearing 3, a suspension 5 which is connected to an end of the arm 4 in parallel to the magnetic disk 2, a pair of magnetic heads 6 which is supported by a leading end of the suspension 5 so as to oppose one another and a voice coil motor which is provided with a coil 7 and a magnet 8 and 8'.

The coil 7 consisting in the voice coil motor is attached to an upper surface of an outer end of the arm 4 and the magnets 8 and 8' are mounted to be opposite to each other in a magnetic housing 9 which is installed on an edge in the main body 1.

The pivot bearing 3 is a centre portion around which the actuator rotates when the pair of the magnetic heads 6 come into contact with each surface of the magnetic disks 2. The rotation force of the actuator is generated by the voice coil motor.

The magnetic heads 6 are respectively provided with a slider raised by the rotation force of the magnetic disk 2 and a magnetic circuit which is integrated with the slider, for recording and reading information on the magnetic disks 2.

Moreover, the hard disk drive includes an actuator latching apparatus which is automatically positioned at a parking zone in the magnetic disk 2 according to information inputted in a system, for preventing an actuator 10 from being vibrated due to an outside impact.

As shown in Figures 1 and 2, the actuator latching apparatus includes a latching arm 21 extending from an end of the voice coil motor, a latching plate 22 attached to an end of the latching arm 21, and a magnetic latching element 20 disposed at a desired portion of the main body 1. The magnetic latching element 20 is provided with a core 23 made of ferromagnetic material, a coil 24 wound on the core 23, a case 24 enclosing the core 23. The core 23 is made to have a nature of a permanent magnet when an electric current is applied to the coil 24 in a forward direction. To the contrary, the core 23 loses the nature of the permanent magnet when the electric current is applied to the coil 24 in a reverse direction.

In the hard disk drive as constructed above, when the electric current is applied to the hard disk drive, the spindle motor rotates along with the magnetic disk 2 connected to the spindle motor. Thus, the magnetic heads 6 mounted on the suspension 5 of the arm 4 are raised at a predetermined height by a pneumatic pressure due to a rotation of the magnetic disk 2 and then moves to a desired position according to the signal from the system. At that time, the electric current is applied to the magnetic latching element 20 so that the latching plate 22 is unlocked.

That is, when the electric current is applied to the coil 24 of the magnetic latching element 20 in the reverse direction, the latching plate 22 is unlocked as the core 23 does not have the nature of the permanent magnet any more. The magnetic head 6 is moved to the desired position as the arm 4 has the rotation force proportional to an intensity of the electric current applied to the coil 7 of the voice coil motor. When the electric current applied to the voice coil motor is interrupted after the electric current is applied to the coil 24 in the forward direction so that the core 23 has the nature of the permanent magnet again, the magnetic head 6 is moved to the desired position so as to read or record the information on the magnetic disk 2 as the electric current is applied to the voice coil motor.

On the other hand, when the electric current applied to the hard disk drive is interrupted, the spindle motor stops the rotation thereof and the magnetic disk 2 also stops the rotation thereof. Accordingly, the magnetic head 6 loses a rising force and automatically moves to the parking zone given in the magnetic disk 2 according to the signal from the system. At the same time, when the electric current is applied to the coil 24 of the magnetic latching element 20 in the forward direction, the core 23 has the nature of the permanent magnet again to lock the latching plate 22 of the latching arm 21 by means of the magnetic force, thereby preventing the magnetic head 6 from moving to the data zone of the magnetic disk 2 due to an impact or vibration applied to the hard disk drive.

In the actuator latching apparatus for use in the hard disk drive according to the conventional art as described above, however, there is a technical difficulty in that the electric current applied to the coil 24 of the magnetic latching element 20 must be controlled in the forward or reverse direction in order to lock the actuator 10. Furthermore, there is an advantage in that a consumption of the electric current is increased.

When the electric current is, albeit for a short time interval, applied to the hard disk drive, the coil 24 wound on the core 23 generates heat. Accordingly, there is a problem in that when the heat generated on the coil 24 increases at a temperature more than the curie point of the ferromagnetic material, the core 23 loses the nature of the magnet so as not to perform the locking of the actuator 10, thereby degrading product reliability.

It is an aim of embodiments of the present invention to overcome or reduce to some extent the above described problems of the prior art.

It is an aim of embodiments of the present invention to provide a magnetic latching apparatus for use in a hard disk drive which is capable of facilitating the locking of an actuator in a simple manner.

It is another aim of embodiments of the present invention to provide a magnetic latching apparatus for use in a hard disk drive, capable of reducing electric current consumption.

It is still another aim of embodiments of the present invention to provide a magnetic latching apparatus for use in a hard disk drive which may be capable of preventing actuator malfunction even if the actuator is used to lock an arm repeatedly, thereby improving reliability of the hard disk drive.

According to an aspect of the present invention, there is provided a magnetic latching apparatus for use in a hard disk drive, in which a magnetic head is automatically positioned at a parking zone of a magnetic disk as an arm returns back to an initial position when an electric current applied to the hard disk drive is interrupted, comprising: one or more permanent magnet disposed at a predetermined portion of the arm; and means for locking and unlocking the arm by means of a magnetic force of the one or more permanent magnet, the means being mounted to be associated with the one or more permanent magnet to repel it when electrical current is applied to the hard disk drive.

Preferably, the means for locking and unlocking the arm is mounted so as to attract said one or more permanent magnet when the electrical current to the hard disk is interrupted.

Preferably, the permanent magnet(s) has one polarity at one end thereof and the other polarity at the other end thereof, of which the one end is fixed to the arm and the other end faces with the means for locking and unlocking the arm.

The means for locking and unlocking the arm preferably includes a core having a coil wound upon it, the core having flanges which respectively are formed at each end thereof, wherein the flange closest to the permanent magnet(s) and the end of the permanent magnet(s) most adjacent to that flange are arranged to be of the same polarity when the electric current is applied to the hard disk drive.

Preferably the permanent magnet(s) has one polarity at one end thereof and the other polarity at the other end thereof, and wherein both ends face with the means for locking and unlocking the arm.

The means for locking and unlocking the arm preferably includes a core having connectors which respectively are formed at each end thereof and have the same polarities as those of the permanent magnet(s) when the electric current is applied to the hard disk drive, a bobbin being combined with the core to be in parallel to the permanent magnet, and a coil being wound on the core.

The means for locking and unlocking the arm may include a pair of bobbins disposed to be spaced apart from each other by a predetermined amount, and coils respectively wound on each bobbin, flanges being formed at first and second ends of those bobbins, the flanges closest to the permanent magnet(s) and the respective end of the permanent magnet(s) most adjacent to those respective flanges being arranged to have the same polarity when the electric current is applied to the hard disk drive.

Preferably, the pair of bobbins are connected with each other by means of a nonconductor fixed to a respective first end of each of the bobbins.

The respective cores of the pair of bobbins preferably extend through each bobbin and a nonconductor is connected to first ends of the cores and connectors are formed on the second ends of the cores, to which the permanent magnet(s) can be detachably connected.

A damping member may be disposed between the outer end of the arm and the permanent magnet so as to connect the arm to the permanent magnet.

The permanent magnet or magnets may have a magnetic force equal to or more than 50 gf.

The core to which the permanent magnet is connectable may be provided with a hinge assembly at an end thereof so as to ensure a connection of the core to the permanent magnet.

The hinge assembly may include a first hinge portion formed on a surface of the outer end of the core and a second hinge portion which is rotatably combined by a hinge pin to the first hinge portion and faces the permanent magnet in a surface to surface connecting manner.

The means for locking and unlocking the arm may be received in a case, except for a portion of the core to which the permanent magnet is lockable.

The means for locking and unlocking the arm preferably interrupts the electric current supplied to the coil once the arm is unlocked, thereby reducing electric current consumption.

The permanent magnets are preferably arranged such that polarities thereof are alternated with each other in a horizontal direction. The means for locking and unlocking the arm may include a core having flanges which respectively are formed at each end thereof and have polarities opposite to those of the permanent magnets and a coil wound on the core.

The permanent magnets may be arranged such that polarities thereof are alternated with each other in a vertical direction. The means for locking and unlocking the arm preferably includes a core having connectors which respectively are formed at each end thereof and have the same polarities as those of the permanent magnets, a bobbin combined with the core to be in parallel to the permanent magnets, and a coil wound on the core.

The means for locking and unlocking the arm may include a pair of bobbins which respectively have flanges formed at each end thereof and have polarities opposite to those of the permanent magnet when the electric current is applied to the hard disk drive, the pair of bobbins being disposed to be spaced at a predetermined apart from each other, and coils respectively wound on each bobbin.

The pair of the bobbins are preferably connected with each other by means of a nonconductor, for example a synthetic resin, fixed to one ends of the bobbins.

The core may extend through each bobbin and have nonconductors connected to one ends of the core and connectors formed on the other ends of the core, to which the permanent magnets can be detachably connected.

A fixing part may extend from a predetermined portion at the outer end of the arm and have a damping member as a buffer, attached thereto, to which the permanent magnet is fixed.

Preferably, the permanent magnet has a magnetic force equal to and more than 50 gf.

The core to which the permanent magnet is connected is preferably provided with a hinge assembly at an end thereof so as to ensure a connection of the core to the permanent magnet.

Preferably, the hinge assembly includes a first hinge portion formed on a surface of the outer end of the core and a second hinge portion which is rotatably combined by a hinge pin to the first hinge portion and faces the permanent magnet in a surface to surface connecting manner.

Preferably, the means for locking and unlocking the arm is received in a case, except for a portion of the core to which the permanent magnet is locked.

The means for locking and unlocking the arm preferably interrupts the electric current supplied to the coil at the same time that the arm is unlocked, thereby reducing a spending of the electric current.

For a better understanding of the invention, and to show how embodiments of the same may be carried into effect, reference will now be made, by way of example, to the accompanying diagrammatic drawings, in which:
Figure 1 is a plan view of a hard disk drive including an actuator locking device according to the conventional art;
Figure 2 is a perspective view showing a construction of the hard disk drive including the actuator locking device according to the conventional art;

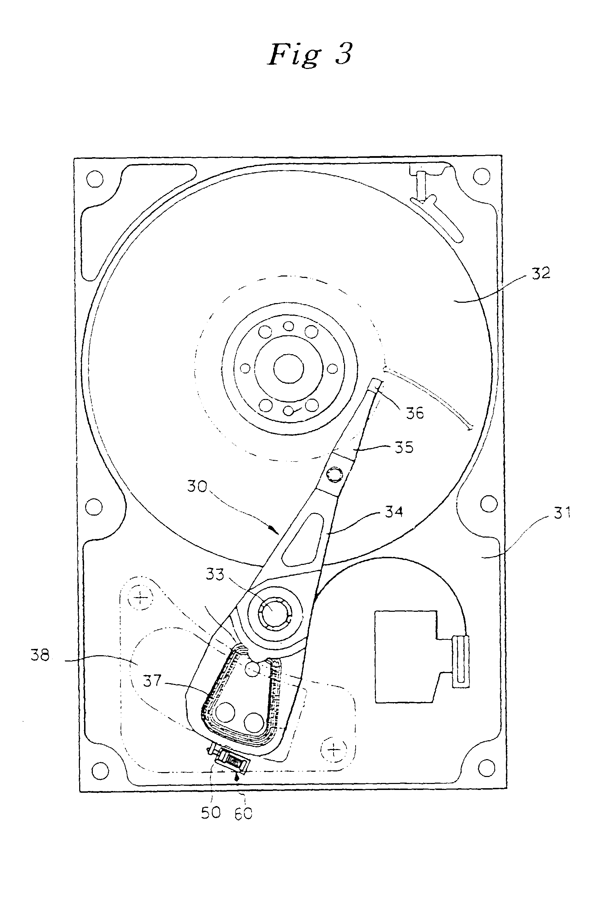

Figure 3 is a plan view of a hard disk drive including a magnetic latching apparatus according to an embodiment of the present invention;
Figure 4 is a plan view showing a construction of the magnetic latching apparatus according to the embodiment of Figure 3;
Figure 5 is a partially enlarged view of an A portion marked in a circle in Figure 4;
Figures 6A and 6B show a magnetic latching apparatus according to an embodiment, in which Figure 6A is a plan view of the magnetic latching apparatus including magnets respectively having magnetic polarities S and N in a horizontal direction and in which a direct current is applied to a coil and Figure 6B is a plan view of the magnetic latching apparatus including magnets respectively having magnetic polarities N and S in the horizontal direction;
Figure 7 is a plan view of the magnetic latching apparatus in Figure 6A, in which the direct current supplied to the coil is interrupted;
Figures 8 and 9 show a magnetic latching apparatus according to another embodiment of the present invention, in which Figure 8 is a perspective view of the magnetic latching apparatus and Figure 9 is a plan view of the magnetic latching apparatus;
Figures 10 and 11 show a magnetic latching apparatus according to a sectional view of an actuator of a latching apparatus according to still another embodiment of the present invention, in which Figure 10 is a plan view of the magnetic latching apparatus in which a direct current supplied to a coil is interrupted and Figure 11 is a plan view of the magnetic latching apparatus in which the direct current is applied to the coil;
Figures 12 and 13 show a magnetic latching apparatus according to still another embodiment of the present invention, in which Figure 12 is a plan view of the magnetic latching apparatus in which a direct current supplied to a coil is interrupted and Figure 13 is a plan view of the magnetic latching apparatus in which the direct current is applied to the coil;
Figures 14 and 15 are graphs showing a change of a magnetic force of the permanent magnet which is one of structures in the magnetic latching apparatus according to the present invention, in which Figure 14 is a graph showing the change of the magnetic force of the permanent magnet in which the polarities are arranged in the horizontal direction and Figure 15 is a graph showing the change of the magnetic force of the permanent magnet in which the polarities are arranged in the vertical direction.

Hereinafter, various embodiments of a magnetic latching apparatus for use in a hard disk drive according to the present invention will be described in detail with reference to the accompanying drawings.

As shown in the drawings, the magnetic latching apparatus for use in the hard disk drive according to the present invention is used for a hard disk drive in which at least one magnetic disk 32 is rotatably supported by a spindle motor at one side of an inner portion of a frame 31 and an actuator 30 is mounted at the other side of the inner portion of the frame 31.

The actuator 30 includes an arm 34 rotatably supported by a pivot bearing 33, a suspension 35 which is fixed to an end of the arm 34 so as to be in parallel to a magnetic disk 32, a pair of magnetic heads 36 which is disposed at a leading end of the suspension 35, and a voice coil motor having a coil 37 and a magnet 38.

The magnetic latching apparatus for use in the hard disk drive includes a magnet 50 disposed at a predetermined portion on an outer end of the arm 34 and an actuator locking and unlocking element 60 which is mounted on a bottom portion of a frame 31 corresponding to the magnet 50, for providing the magnet with a repulsive force or locking an actuator 30 by means of a magnetic force of the magnet when an electric current is applied to the hard disk drive.

The actuator locking and unlocking element 60 includes a core 63 having flanges 61 and 62 respectively formed at opposite ends thereof and a coil 64 wound on the core 63. The flanges respectively have a larger diameter than that of the core 63.

The core 63 preferably is made of a pure iron material, of which a peripheral surface is coated with isolating agent. Then, the coil 64 is wound on the core 63, of which both ends respectively are connected in series to an electric wire. The core 63 acts as an electromagnet when a direct current is applied to the coil 64.

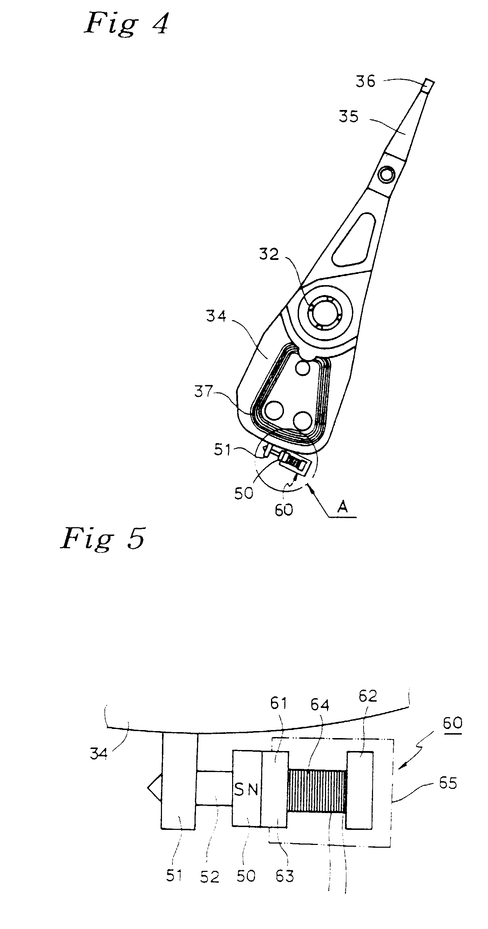

The core 63 is held to be exposed to atmosphere. As shown in Figure 5, however, the core 63 is preferably received in a separate case 65.

Further, the magnet 50 provided to the arm 34 may be integrally fixed to a fixing portion 51 extending from the predetermined portion on the outer end of the arm 34. Alternatively, a damping member 52 as a buffer, for example rubber or the like, may be attached to the fixing portion 51 of the arm 34, to which the magnet 50 in turn is fixed to the damping member 52. Thereby, when the magnet 50 becomes in contact with the core 63, the damping member 52 absorbs an impact.

It is preferable that the permanent magnet 50 has a magnetic force of about 50 gf, more preferably that the permanent magnet 50 has a magnetic force of about 100 gf. When the direct current is applied to the coil 64 as one part of the actuator locking and unlocking element 60, the repulsive force is arranged to be equal to or more than the magnetic force of the permanent magnet 50.

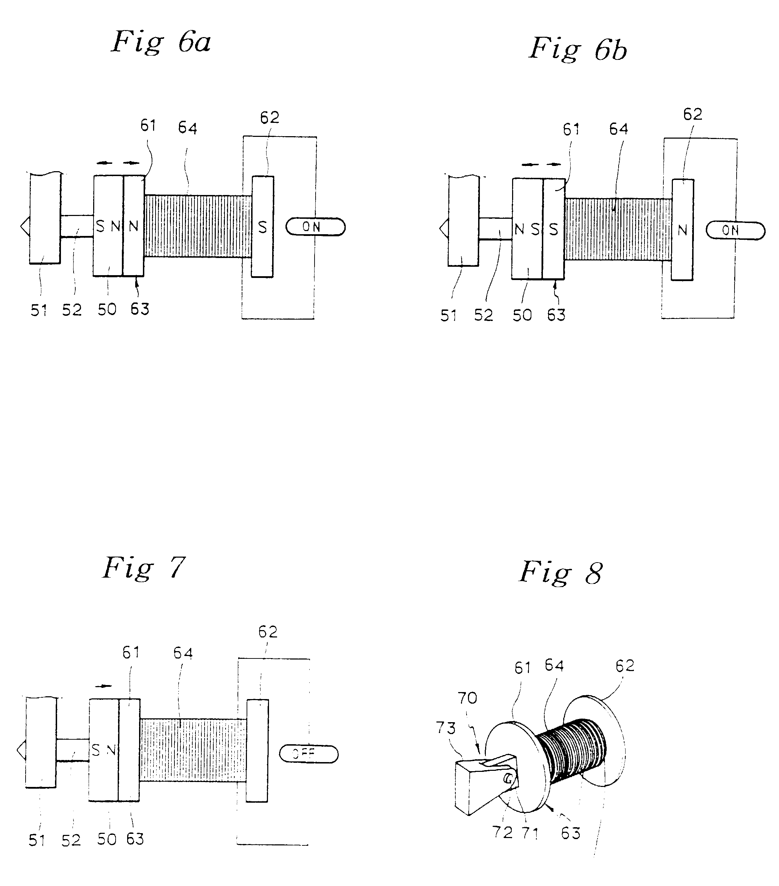

Furthermore, the permanent magnet 50 may have polarities S and N, or N and S in the horizontal direction as shown in Figures 6A and 6B. When the direct current is applied to the coil 64 of the actuator locking and unlocking element 60, the flanges 61 and 62 of the core 63 have polarities N and S or S and N opposite to polarities S and N or N and S of the permanent magnet 50 so as to oppose the polarities of the permanent magnet 50. When the direct current applied to the coil 64 is interrupted as shown in Figure 7, the flanges 61 and 62 of the core 63 do not generate the repelling magnetic force so that the permanent magnet 50 is attracted and attached to one flange of the core 63 due to the magnetic force of the permanent magnet 50.

Hereinafter, an operation of the magnetic latching apparatus for use in the hard disk drive according to an embodiment of the present invention as constructed above will be described in detail.

When the electric current is applied to the hard disk drive, a spindle motor drives to rotate the magnetic disk 32.

The magnetic head 36 rises to a predetermined height by a pneumatic pressure generated due to the rotation of the magnetic disk 32 as the magnetic disk 32 rotates. On the other hand, the magnetic head 36 is shifted to a designed position, according to a signal of a system. At that time, the arm 34 is unlocked in such a manner that the direct current is applied to the coil 64 of the actuator locking and unlocking element 60 so that the core 63 becomes an electromagnet.

In other words, in the state where an electric current applied to the hard disk drive is interrupted, the permanent magnet 50 is held to be attached to the flange 61 at the end of the core 63 by means of the magnetic force of the permanent magnet 50. Whereas, when the direct current is applied to the coil 64, the core 63 is made to be an electromagnet which has the same polarity as that of the permanent magnet 50 to thereby repel it. As a result, the core 63 repels the permanent magnet 50 by using the magnetic force thereof, so that the arm 34 can freely rotate.

As described above, once the arm 34 is unlocked the electric current applied to the coil 64 can be interrupted simultaneously, such that the core 63 does not have a magnetism any more. Thus, the arm 34 can rotate depending on an intensity of the electric current applied to the voice coil motor to move the magnetic head 36 to the desired position. The magnetic head 36 records or reads data on or from the magnetic disk 32 at the desired position.

On the other hand, when the electric current applied to the hard disk drive is interrupted, the spindle motor stops the rotation thereof. Thus, the magnetic disk 32 also stops the rotation thereof. As a result, the magnetic head 36 loses its raising force and is automatically positioned at a parking zone in the inner side of the magnetic disk according to the signal of the system. At that time, as shown in Figure 7, since the electric current applied to the coil 64 is interrupted so that the core 63 does not have the magnetism, the permanent magnet 50 is attached to one flange 61 of the core 63 by means of the magnetic force thereof. Accordingly, the actuator 30 is automatically locked.

While an impact force is present between the core 63 and the permanent magnet 50 when the arm 34 is repeatedly locked and unlocked as described above, the damping member 52 made of a soft material such as a rubber and the like is disposed between the permanent magnet 50 and the fixing portion of the arm 34 to dampen the impact force imparted by means of the permanent magnet 50. Thus, it is possible to reduce or prevent the impact force from being transferred through the arm 34 to the magnetic head 36, thereby preventing a damage of the magnetic disk 32 due to the magnetic head 36.

The locking force of the arm 34 is determined by the magnetic force of the permanent magnet 50 and ensures that the magnetic head 36 is not in the data zone of the magnetic disk 32 when locked even though the impact force or a vibration is applied to the hard disk drive.

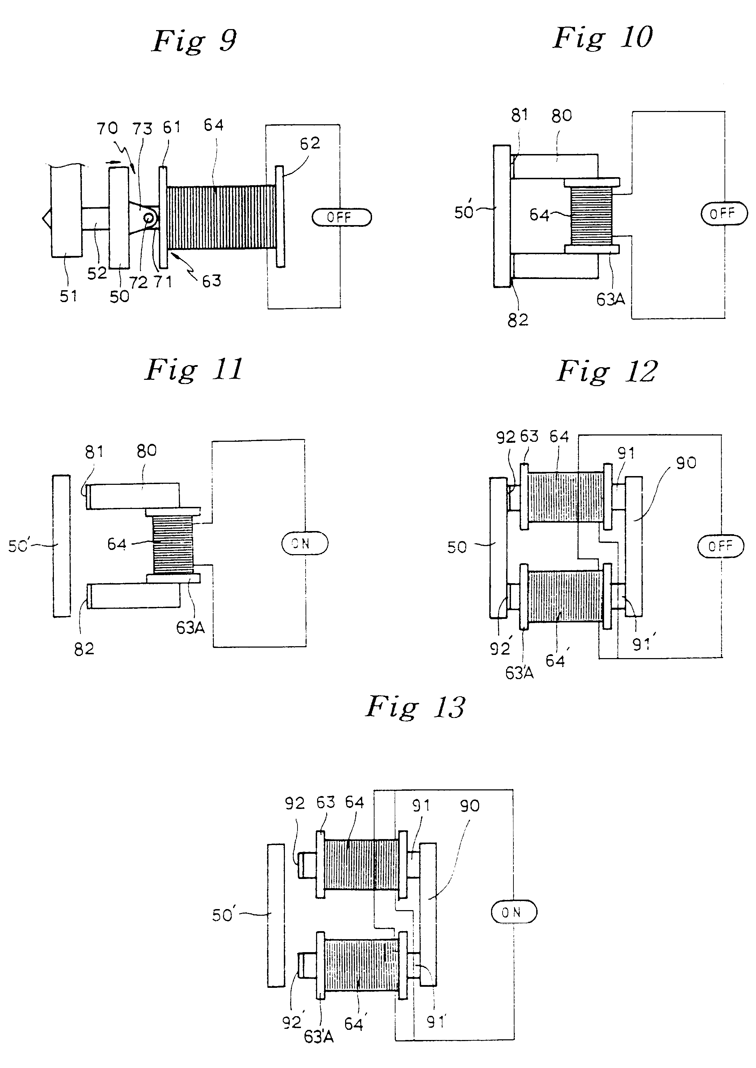

Figures 8 and 9 are views of the magnetic latching apparatus for use in the hard disk drive according to another embodiment of the present invention. As shown in Figures 8 and 9, a hinge structure 70 is formed on one of the flanges 61 and 62 of the core 63 so that the permanent magnet 50 and the core 63 have the same contact area as each other when the actuator 30 is assembled and the permanent magnet 50 is always locked to the core 63 with a uniformly magnetic force.

In the hinge structure 70 as will be described below, a first hinge portion 71 is formed on the flange 61 of the core 63 and a second hinge portion 73 as a hinge pin 72 is connected to the first hinge portion 71 so that the permanent magnet 50 is locked and unlocked to/from the second hinge portion 73.

According to the embodiment of the present invention as described above, when the electric current is applied to the coil 64 in the hard disk drive and the core 63 is made to be the electromagnet, the first and second hinge portions 71 and 73 of the hinge structure 70 are also made to be electromagnets. Accordingly, the second hinge portion 73 has the same polarity as that of the permanent magnet 50, resulting in unlocking the arm 34 from the core 63. To the contrary, when the electric current applied to the hard disk drive is interrupted, as shown in Figure 9, the second hinge portion 73 of the core 63 does not have the magnetism any more, so that the permanent magnet 50 is attached to the second hinge portion 73 of the core 63 by means of the magnetic force thereof.

On the other hand, Figures 10, 11, 12 and 13 show the magnetic latching apparatus according to still another embodiment of the present invention. In the magnetic latching apparatus, the permanent magnet 50' has polarities N and S or S and N in a vertical direction in order that a magnetic force of a permanent magnet 50' applied to an identity zone of the magnetic disk 32 is minimized. Thereby, it is facilitated to servo control the magnetic latching apparatus and to enlarge the data zone.

As will be described in detail below, a change of the magnetic force is sluggish in the state that the polarities of the permanent magnet 50 are arranged in the horizontal direction as shown in Figures 6A and 6B rather than in the vertical direction as shown in Figures 10 to 13.

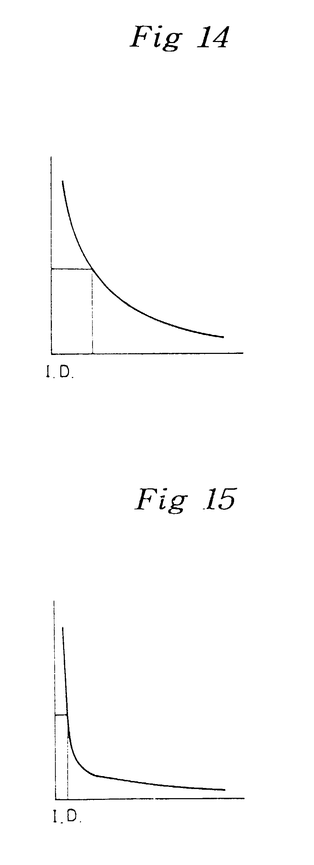

Therefore, in the case of arranging the polarities of the permanent magnet 50 in the horizontal direction, the intensity of the magnetic force of the magnet 50 is enhanced as the magnetic head 36 is adjacent to the identity zone of the magnetic disk 32. As a result, it is difficult to control the magnetic latching apparatus. Accordingly, the parking zone of the magnetic disk 32 is enlarged unnecessarily while the data zone of the magnetic disk 32 is reduced. This may cause a storage capacity of the magnetic disk 32 to be small (see Figure 14).

According to still another embodiment of the present invention, however, the magnetic force of the magnet 50' becomes relatively small in the identity zone when the polarities of the permanent magnet 50' are arranged in the horizontal direction, resulting in facilitating to control the magnetic latching apparatus. Furthermore, the data zone of the magnetic disk 32 is enlarged to increase the storage capacity of the magnetic disk 32 (see Figure 15).

Hereinafter, a structural feature of the magnetic latching apparatus according to the still another embodiment of the present invention will be described in detail. As shown in Figures 10 and 11, a bobbin 63A having a coil 64 wound thereon is disposed between cores 80 respectively having connecting portions 81 and 82 at exposed ends thereof and the permanent magnet 50' is disposed in such a manner that polarities N and S thereof respectively face to the connecting portions 81 and 82. In the state, when the electric current applied to the coil 64 is interrupted, the permanent magnet 50' is locked to the connecting portions 81 and 82 by means of the magnetic force of the permanent magnet 50'. To the contrary, when the electric current is applied to the coil 64, the cores 80 are made to be electromagnets and respectively have like polarities at the connecting portions thereof so that the permanent magnet 50' is repelled and unlocked from the cores 80.

As shown in Figures 12 and 13, moreover, cores 91 and 91' are disposed in such a manner as to be parallel to each other at a predetermined distance apart. Then, bobbins 63A and 63A' having coils wound thereon are respectively assembled with each of the cores 91 and 91' while nonconductors 90 such as synthetic resin are respectively attached to one end of each cores 91 and 91'. Furthermore, connecting portions 92 and 92' respectively are formed at the other end of each cores 91 and 91', which face with each polarity of the permanent magnet 50'.

In the magnetic latching apparatus for use in the hard disk drive according to the still another embodiment of the present invention as described above, when the electric currents applied to the coils 64 and 64' are interrupted, the permanent magnet 50' is locked to the connecting portions 92 and 92' of the cores 91 and 91' by means of the magnetic force of the permanent magnet 50'. To the contrary, when the electric currents are applied to the coils 64 and 64', the core 91 and 91' are made to be electromagnets having polarities opposite to each other at each connecting portions 92 and 92' so that the permanent magnet 50' is unlocked from the connecting portions 92 and 92'.

The magnetic latching apparatus for use in the hard disk drive according to the present invention is not limited to the embodiments as described herein and shown in drawings.

In the magnetic latching apparatus for use in the hard disk drive, as described above, the arm is rotated at an initial position so that the magnetic head is automatically positioned at the parking zone of the magnetic disk as the electric current applied to the hard disk drive. The magnetic latching apparatus is provided with the permanent magnet disposed at a desired portion on the outer end of the arm and the actuator locking and unlocking element for providing the repulsive force to the permanent magnet or locking the arm by means of the magnetic force of the permanent magnet according to the application of the electric current to the hard disk drive.

Accordingly, there are advantages in that it is facilitated to lock the actuator to the permanent magnet and it is possible to reduce a consumption of the electric current. There is further advantage in that even if the actuator is repeatedly operated, the actuator can be prevented from malfunctioning so that a reliance on products can be improved.

While the present invention has been particularly shown and described with reference to particular embodiments thereof, it will be understood by those skilled in the art that various changes in form and detail may be effected therein without departing from the scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A magnetic latching apparatus for use in a hard disk drive, in which a magnetic head (36) is automatically positioned at a parking zone of a magnetic disk (32) as an arm (34) returns back to an initial position when an electric current applied to the hard disk drive is interrupted, comprising:
one or more permanent magnet (50) disposed at a predetermined portion of the arm (34); and
means for locking and unlocking the arm (34) by means of a magnetic force of the one or more permanent magnet (50), the means being mounted to be associated with the one or more permanent magnet (50) to repel it when electrical current is applied to the hard disk drive.

2. Apparatus according to claim 1, in which the means for locking and unlocking the arm is mounted so as to attract said one or more permanent magnet (50) when the electrical current to the hard disk is interrupted.

3. A magnetic latching apparatus for use in a hard disk drive as claimed in claim 2, wherein the permanent magnet(s) (50) has one polarity at one end thereof and the other polarity at the other end thereof, of which the one end is fixed to the arm (34) and the other end faces with the means for locking and unlocking the arm.

4. A magnetic latching apparatus for use in a hard disk drive as claimed in claim 3, wherein the means for locking and unlocking the arm includes a core (63) having a coil (64) wound upon it, the core (63) having flanges (61, 62) which respectively are formed at each end thereof and, wherein, the flange (61) closest to the permanent magnet and the end of the permanent magnet most adjacent to that flange are arranged to be of the same polarity when the electric current is applied to the hard disk drive.

5. A magnetic latching apparatus for use in a hard disk drive as claimed in claim 1 or 2, wherein the permanent magnet(s) (50') has one polarity at one end thereof and the other polarity at the other end thereof, and wherein both ends face with the means for locking and unlocking the arm.

6. A magnetic latching apparatus for use in a hard disk drive as claimed in claim 5, wherein the means for locking and unlocking the arm includes a core (63A) having connectors (81, 82) which respectively are formed at each end thereof and have the same polarities as those of the permanent magnet (50') when the electric current is applied to the hard disk drive, a bobbin combined with the core (63A) to be in parallel to the permanent magnet (50'), and a coil (64) wound on the core (63A).

7. A magnetic latching apparatus for use in a hard disk drive as claimed in claim 5, wherein the means for locking and unlocking the arm includes a pair of bobbins disposed to be spaced apart from each other by a predetermined amount, and coils respectively wound on each bobbin, flanges (91, 92; 91', 92') being formed at first and second ends of those bobbins, the flanges (92; 92') closest to the permanent magnet(s) and the respective end of the permanent magnet(s) most adjacent to those respective flanges being arranged to have the same polarity when the electric current is applied to the hard disk drive.

8. A magnetic latching apparatus for use in a hard disk drive as claimed in claim 7, wherein the pair of the bobbins are connected with each other by means of a nonconductor (90) fixed to a respective first end of each of the bobbins.

9. A magnetic latching apparatus for use in a hard disk drive as claimed in claim 8, wherein the respective cores (63; 63'A) of the pair of bobbins extend through each bobbin and a nonconductor (90) is connected to first ends (91; 91') of the cores and connectors (92, 92') are formed on the second ends of the cores (63; 63'A), to which the permanent magnet(s) (50') can be detachably connected.

10. A magnetic latching apparatus for use in a hard disk drive as claimed in any of the preceding claims, wherein a damping member (52) is disposed between the outer end of the arm (34) and the permanent magnet (50) so as to connect the arm (34) to the permanent magnet (50).

11. A magnetic latching apparatus for use in a hard disk drive as claimed in any of the preceding claims, wherein the permanent magnet or magnets have a magnetic force equal to or more than 50 gf.

12. A magnetic latching apparatus for use in a hard disk drive as claimed in any of the preceding claims, wherein the core to which the permanent magnet (50) is connectable is provided with a hinge assembly (70) at an end thereof so as to ensure a connection of the core to the permanent magnet (50).

13. A magnetic latching apparatus for use in a hard disk drive as claimed in claim 12, wherein the hinge assembly (70) includes a first hinge portion (71) formed on a surface of the outer end of the core (63) and a second hinge portion (73) which is rotatably combined by a hinge pin (72) to the first hinge portion (71) and faces the permanent magnet (50) in a surface to surface connecting manner.

14. A magnetic latching apparatus for use in a hard disk drive as claimed in any of the preceding claims, wherein the means for locking and unlocking the arm (34) is received in a case (65), except for a portion of the core (63) to which the permanent magnet (50) is lockable.

15. A magnetic latching apparatus for use in a hard disk drive as claimed in any preceding claim, wherein the means for locking and unlocking the arm (34) interrupts the electric current supplied to the coil once the arm is unlocked, thereby reducing electric current consumption.
